(19) Europäisches Patentamt
European Patent Office
Office européen des brevets

(11) **EP 3 553 656 A1**

(12) **EUROPEAN PATENT APPLICATION**
published in accordance with Art. 153(4) EPC

(43) Date of publication:
**16.10.2019 Bulletin 2019/42**

(51) Int Cl.:
*G06F 9/50* (2006.01)   *H04L 29/08* (2006.01)

(21) Application number: **17887260.2**

(22) Date of filing: **13.10.2017**

(86) International application number:
**PCT/CN2017/106096**

(87) International publication number:
**WO 2018/120991 (05.07.2018 Gazette 2018/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.12.2016 CN 201611261831**

(71) Applicant: **Huawei Technologies Co., Ltd.**
**Longgang District**
**Shenzhen, Guangdong 518129 (CN)**

(72) Inventors:
• **ZENG, Yan**
  **Shenzhen**
  **Guangdong 518129 (CN)**
• **LUO, Zhancheng**
  **Shenzhen**
  **Guangdong 518129 (CN)**
• **LIN, Zongfang**
  **Shenzhen**
  **Guangdong 518129 (CN)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **RESOURCE SCHEDULING METHOD AND DEVICE**

(57)   This application discloses a resource scheduling method and apparatus, so as to resolve a prior-art problem of low resource usage. The method includes: determining, by a resource scheduler, a dominant share of an $i^{th}$ user, and determining a dominant idle resource of an $a^{th}$ node; then selecting, from N users, a first user with a minimum dominant share, and selecting a first task from tasks, of the first user, to which no resources are allocated; selecting a first node from M nodes according to dominant idle resources of the M nodes, where a dominant idle resource of the selected first node is the same as a resource corresponding to a dominant share of the selected first user; and finally, scheduling, by the resource scheduler, a resource of the selected first node to the selected first user, so that the first user executes the selected first task by using the scheduled resource.

FIG. 1

**Description**

This application claims priority to Chinese Patent Application No. 201611261831.X, filed with the Chinese Patent Office on December 30, 2016 and entitled "RESOURCE ALLOCATION METHOD AND APPARATUS", which is incorporated herein by reference in its entirety.

**TECHNICAL FIELD**

This application relates to the field of information technologies, and in particular, to a resource scheduling method and apparatus.

**BACKGROUND**

Large-scale data processing imposes increasingly high requirements on computer performance and computing resources. To efficiently process large-scale data, various distributed computing frameworks, such as Hadoop and Spark, and unified distributed-re source management and scheduling platforms, such as Mesos and YARN, are developing gradually.

Resource allocation that supports multi-user fairness and inter-node load balancing is a core of the distributed computing frameworks and the unified distributed-re source management and scheduling platforms.

For resource allocation supporting user fairness, a dominant resource fairness (English: Dominant Resource Fairness, DRF for short) algorithm is used in an existing technical solution. A main concept of the algorithm is: In a multidimensional resource environment, resource allocation for a user should be determined by a dominant share (dominant share) of the user, where the dominant share is a maximum value of ratios of all types of resources that are already allocated to the user to total resources, and a resource corresponding to the maximum value is a dominant resource. A purpose of the DRF algorithm is an attempt to maximize a minimum dominant resource of all users or make dominant resources of different users as equal as possible.

Specific steps of resource allocation of the DRF algorithm:

Step 1: Calculate a usage ratio (share) of each type of resource that has been currently allocated to an $i^{th}$ user, and select a maximum value of usage ratios as a dominant share $s_i$ of the $i^{th}$ user:

$$s_i = \max_{j=1}^{m} \{ u_{ij} / r_j \} ,$$

where $u_{ij}$ represents usage of a resource j by a user i, $r_j$ represents a total allocatable resource volume of the resource j, and m represents a total quantity of resource types. The total allocatable resource volume is a total volume of resources that are in a distributed system and can be allocated to a user when a scheduling request is received.

Step 2: Select a task from a user with a minimum dominant share each time, and if there are sufficient available resources in a system, allocate a resource to the selected task and start the selected task for execution.

Step 3: Repeat step 1 and step 2 until there is no available resource or there is no task to be executed.

For resource allocation supporting inter-node load balancing, an existing technical solution is to implement inter-node load balancing based on a quantity of tasks. There are three common inter-node load balancing solutions: a polling manner, a minimum connection quantity manner, and a random manner. The polling manner is to successively perform polling and allocate a plurality of tasks to a plurality of nodes. The minimum connection quantity manner is to collect statistics about a quantity of tasks currently processed by each node, and allocate a task to a node with a minimum quantity of current processing tasks each time. The random manner is to use a random number generator, and during each task allocation, use data generated by the random number generator as a currently selected node number, and allocate a task to a node corresponding to the node number.

In conclusion, in the solutions provided in the prior art, two dimensions of user fairness and node load balancing are separately considered, and correlation between user fairness and node load balancing is neglected, resulting in low resource usage efficiency.

**SUMMARY**

This application provides a resource scheduling method and apparatus, so as to resolve a prior-art problem of low resource usage.

According to a first aspect, this application provides a resource scheduling method, where the method is used to allocate resources to tasks of N users in a distributed system, and the method includes:

selecting, by the resource scheduler from the N users, a first user with a minimum dominant share, where the dominant share is a maximum value of resource usage ratios of resources occupied by a user, the resource usage ratio is a ratio of a volume of a type of resource occupied by the user to a total allocatable resource volume of the resource, and N is a positive integer greater than 1;

selecting, by the resource scheduler, a first task from tasks, of the first user, to which no resources are allocated;

selecting, by the resource scheduler, a first node from M nodes according to dominant idle resources of the M nodes, where a dominant idle resource of the first node is the same as a resource corresponding to a dominant share of the first user, the dominant idle resource is a resource with a maximum idle ratio on a node, the idle ratio is a ratio of a current idle resource volume of a type of resource to a total resource volume of the resource, and M is a positive integer greater than 1; and

scheduling, by the resource scheduler, a resource of the first node to the first user, so that the first user executes the first task by using the resource of the first node.

Before scheduling a task each time, the resource scheduler needs to first determine a dominant share of an $i^{th}$ user and determine a dominant idle resource of an $a^{th}$ node. Specifically, this may be implemented in the following manner:

The resource scheduler determines the dominant share of the $i^{th}$ user, and determines the dominant idle resource of the $a^{th}$ node.

The dominant share is a maximum value of user resource usage ratios corresponding to m types of resources; a user resource usage ratio corresponding to a $j^{th}$ type of resource is a ratio of a resource volume of the $j^{th}$ type of resource that has been currently allocated to the $i^{th}$ user to a total allocatable resource volume of the $j^{th}$ type of resource; j runs over all positive integers not greater than m; m represents a total quantity of to-be-scheduled resource types; i runs over all positive integers not greater than N; and N represents a total quantity of users.

The dominant idle resource is a resource that is of the m types of resources and that has a maximum corresponding idle ratio; an idle ratio corresponding to a $b^{th}$ type of resource is a ratio of a current idle resource volume of the $b^{th}$ type of resource of the $a^{th}$ node to a total resource volume of the $b^{th}$ type of resource of the $a^{th}$ node, b runs over all positive integers not greater than m; a runs over all positive integers not greater than M, and M represents a total quantity of nodes with to-be-scheduled resources.

After determining the dominant share of the $i^{th}$ user and determining the dominant idle resource of the $a^{th}$ node, the resource scheduler selects, from the N users, the first user with the determined minimum dominant share, and selects the first task from tasks, of the first user, to which no resources are allocated; and then selects the first node from the M nodes according to the dominant idle resources of the M nodes. A dominant idle resource of the selected first node is the same as a resource corresponding to a dominant share of the selected first user. During scheduling, specifically, the resource of the selected first node is scheduled to the selected first user, so that the first user executes the selected first task by using the scheduled resource. Because a resource is preferentially allocated to a task of a user with a small dominant share, fairness between users is implemented. Then, a node is selected based on dominant idle resources of nodes, and a resource of the selected node is allocated to the selected user. Because a dominant idle resource of the selected node is the same as a resource corresponding to a dominant share of the selected user, it is implemented that different types of users are allocated to different types of nodes, thereby implementing node resource load balancing, and reducing resource sharing interference to some extent.

In a possible design, the M nodes are grouped into different groups, and dominant idle resources of nodes in a same group are the same. For example, the M nodes are grouped into a CPU resource group and a memory resource group. Dominant idle resources of nodes included in the CPU resource group are all CPU resources, and dominant idle resources of nodes included in the memory resource group are all memory resources. Therefore, the selecting a first node from M nodes may be implemented in the following manner:

The resource scheduler selects a group from the different groups, where dominant idle resources of nodes included in the selected group are the same as the resource corresponding to the dominant share of the selected first user; and the resource scheduler selects, according to idle ratios of the dominant idle resources of the nodes included in the selected group, the first node from the nodes included in the selected group.

According to the foregoing design, the nodes are dynamically grouped into different groups according to a current load status (a user dominant share), to receive different types of tasks. This implements node resource load balancing and can prevent interference between shared resources.

In a possible design, the first node is a node that is of nodes with dominant idle resources the same as the resource corresponding to the dominant share of the first user and that has a maximum idle ratio of a dominant idle resource. Specifically, the first node is a node that is of the M nodes and that has a maximum idle ratio of a dominant idle resource. That is, when the first node is selected from the M nodes, the first node with the maximum idle ratio of a dominant idle resource is selected.

In a possible design, when at least two nodes with dominant idle resources the same as the resource corresponding to the dominant share of the selected first user, the selecting, by the resource scheduler, a first node from M nodes according to dominant idle resources of the M nodes may be specifically implemented in the following manner: The resource scheduler determines at least two nodes with dominant idle resources the same as the resource corresponding to the dominant share of the selected first user; and the resource scheduler selects, from the at least two nodes, a node with a maximum first user dominant usage ratio, where a first user dominant usage ratio of a node is a maximum value of user usage ratios of resources, on the node, occupied by the first user, and a user usage ratio of a type of resource is a ratio of usage of the resource occupied by the user to a total allocatable volume of the resource.

When the resource scheduler selects the first node from the at least two nodes, a user dominant usage ratio of the selected first user on each node of the at least two nodes is first determined. This may be specifically implemented in the following manner:

The resource scheduler determines a user dominant usage ratio of the selected first user on a $c^{th}$ node of the at least two nodes. The user dominant usage ratio is a maximum value of user usage ratios corresponding to the m types of resources; a user usage ratio corresponding to a $d^{th}$ type of resource is a ratio of a resource volume of the $d^{th}$ type of resource already allocated to the selected user on the $c^{th}$ node to a total allocatable resource volume of the $d^{th}$ type of resource of the $c^{th}$ node; the $c^{th}$ node is any one of the at least two nodes; and d runs over all positive integers not greater than m.

The resource scheduler selects, from the at least two nodes, the first node corresponding to a minimum user dominant usage ratio of the first user.

According to the foregoing design, a node is selected according to a user dominant usage ratio of a user on each node, and a node with a minimum user dominant usage ratio is selected for a task of the user each time. This implements resource load balancing of the user on each node.

In a possible design, the method may further include:

When determining that the dominant idle resources of all the nodes are different from the resource corresponding to the dominant share of the selected first user, the resource scheduler selects a second user with a maximum dominant share from other users with resources different from the resource corresponding to the dominant share of the first user, and selects a second task from tasks, of the second user, to which no resources are allocated; the resource scheduler selects, from the M nodes, a second node that has a maximum idle ratio of a dominant idle resource and whose node dominant idle resource is the same as a resource corresponding to a dominant share of the selected second user; and the resource scheduler schedules a resource of the selected second node to the selected second user, so that the second user executes the selected second task by using the scheduled resource.

According to the foregoing design, when the user has no matching node, scheduling is preferentially performed for another user. This can reduce, to some extent, resource sharing interference caused by strong allocation. In addition, when determining that resources corresponding to idle ratios of the dominant idle resources of all the nodes are different from the resource corresponding to the dominant share of the selected first user, the resource scheduler selects the second user with the maximum dominant share from another user with the resource different from the resource corresponding to the dominant share of the first user for scheduling. This can ensure that tasks of different types of users are allocated to different nodes, and then ensure node resource load balancing.

In a possible design, the method may further include:

When determining that an idle ratio of the dominant idle resource of the $a^{th}$ node is less than a preset threshold, determining, by the resource scheduler, that resource scheduling is not performed on the $a^{th}$ node.

According to the foregoing design, resource scheduling is no longer performed on a node with an idle ratio of a dominant idle resource less than the preset threshold. Therefore, a resource waste and a time resource waste caused by occupying a resource of the resource scheduler are avoided when a to-be-scheduled resource volume does not meet a user requirement.

According to a second aspect, this application provides a resource scheduling apparatus, including:

a first determining module, configured to determine a dominant share of an $i^{th}$ user, and determine an idle ratio of a dominant idle resource of an $a^{th}$ node, where the dominant share is a maximum value of user resource usage ratios corresponding to m types of resources; a user resource usage ratio corresponding to a $j^{th}$ type of resource is a ratio of a resource volume of the $j^{th}$ type of resource that has been currently allocated to the $i^{th}$ user to a total allocatable resource volume of the $j^{th}$ type of resource; j runs over all positive integers not greater than m; m represents a total quantity of to-be-scheduled resource types; i runs over all positive integers not greater than N; N is a positive integer greater than 1; the dominant idle resource is a resource that is of the m types of resources and that has a maximum corresponding idle ratio; an idle ratio corresponding to a $b^{th}$ type of resource is a ratio of a current idle resource volume of the $b^{th}$ type of resource of the $a^{th}$ node to a total resource volume of the $b^{th}$ type of resource of the a<sup>th</sup> node, b runs over all positive integers not greater than m; a runs over all positive integers not greater than M, and M represents a total quantity of nodes with to-be-scheduled resources;

a first selecting module, configured to select, from the N users, a first user with a minimum dominant share determined by the first determining module, and select a first task from tasks, of the first user, to which no resources are allocated;

a second selecting module, configured to select a first node from M nodes according to dominant idle resources that are on the M nodes and that are determined by the first determining module, where a dominant idle resource of the selected first node is the same as a resource corresponding to a dominant share of the selected first user; and

a scheduling module, configured to schedule a resource of the first node selected by the second selecting module to the first user selected by the first selecting module, so that the first user executes the selected first task by using the scheduled resource.

In a possible design, the M nodes are grouped into different groups, dominant idle resources of nodes in a same group are the same, and the second selecting module is specifically configured to: select a group from the different groups, where resources corresponding to idle ratios of dominant idle resources of nodes included in the selected group are the same as the resource corresponding to the dominant share of the selected first user; and select, according to the idle ratios of the dominant idle resources of the nodes included in the selected group, the first node from the nodes included in the selected group.

In a possible design, the first node is a node that is of the M nodes and that has a maximum idle ratio of a dominant idle resource.

In a possible design, the resource scheduling apparatus further includes:

a second determining module, configured to determine at least two nodes with dominant idle resources the same as the resource corresponding to the dominant share of the selected first user; and

determine a user dominant usage ratio of the selected first user on a c<sup>th</sup> node of the at least two nodes, where the user dominant usage ratio is a maximum value of user usage ratios corresponding to the m types of resources; a user usage ratio corresponding to a d<sup>th</sup> type of resource is a ratio of a resource volume of the d<sup>th</sup> type of resource that is already allocated to the selected user and that is of the c<sup>th</sup> node to a total allocatable resource volume of the d<sup>th</sup> type of resource of the c<sup>th</sup> node; the c<sup>th</sup> node is any one of the at least two nodes; and d runs over all positive integers not greater than m; where

the second selecting module is specifically configured to select, from the at least two nodes, the first node corresponding to a minimum user dominant usage ratio that is of the first user and that is determined by the second determining module.

In a possible design, the first selecting module is further configured to: when it is determined that the dominant idle resources of all the nodes are different from the resource corresponding to the dominant share of the selected first user, select a second user with a maximum dominant share from other users with resources different from the resource corresponding to the dominant share of the first user, and select a second task from tasks, of the second user, to which no resources are allocated;

the second selecting module is further configured to select, from the M nodes, a second node that has a maximum idle ratio of a dominant idle resource and whose node dominant idle resource is the same as a resource corresponding to a dominant share of the second user selected by the first selecting module; and

the scheduling module is further configured to schedule a resource of the second node selected by the second selecting module to the selected second user, so that the second user executes the selected second task by using the scheduled resource.

In a possible design, the scheduling module is further configured to: when it is determined that an idle ratio of the dominant idle resource of the a<sup>th</sup> node is less than a preset threshold, determine that resource scheduling is not performed on the a<sup>th</sup> node.

According to the solution provided in this application, a resource scheduler determines a dominant share of each user and an idle ratio of a dominant idle resource of each node, and then allocates resources of nodes to users based on dominant shares and idle ratios of dominant idle resources. In this way, both fairness between users and load balancing between nodes are considered, thereby improving a resource utilization, and reducing resource sharing interference to some extent.

According to a third aspect, this application provides a resource scheduling apparatus, where the apparatus includes:

a communications interface, a memory, and a processor. The memory is configured to store program code that the processor needs to execute. The communications interface is configured to receive a user task sent by a client. The processor is configured to execute the program code stored by the memory, and is specifically configured to execute the method of the first aspect or any design of the first aspect.

According to a fourth aspect, this application further provides a computer readable storage medium, configured to store a computer software instruction used for executing functions of the foregoing first aspect and any design of the first aspect, where the computer software instruction includes a program designed for executing the method of foregoing first aspect and any design of the first aspect.

## BRIEF DESCRIPTION OF DRAWINGS

FIG. 1 is a flowchart of a resource scheduling method according to this application;
FIG. 2 is a flowchart of another resource scheduling method according to this application;
FIG. 3 is a schematic diagram of a distributed system architecture according to this application;
FIG. 4 is a schematic diagram of node resource quantities according to this application;
FIG. 5 is a schematic diagram of resource quantities required by tasks of users according to this application;
FIG. 6 is a schematic diagram of a resource scheduling apparatus according to this application; and
FIG. 7 is a schematic diagram of a resource scheduling apparatus according to this application.

## DESCRIPTION OF EMBODIMENTS

To make the objectives, technical solutions, and advantages of this application clearer, the following further describes this application in detail with reference to the accompanying drawings.

This application provides a resource scheduling method and apparatus, for resolving a prior-art problem of relatively low resource usage efficiency. The method and the apparatus are based on a same concept. Because the method and the apparatus use similar principles for resolving the problems, implementation of the apparatus and the method can be referenced mutually, and repeated parts are not described.

This application may be applied to a distributed system. The distributed system includes a plurality of nodes that provide schedulable resources, a resource scheduler that executes resource scheduling, and a plurality of users.

There may be a plurality of types of resources, for example, a computing resource used for providing a computing capability, a storage resource used for providing storage space, and a network resource used for providing a transmission channel. The computing resource may be a central processing unit (Central Processing Unit, CPU for short) resource, and the storage resource may be a memory resource.

Plurality included in this application indicates two or more than two.

In addition, it should be understood that, in description of this application, words such as "first" and "second" are merely used for purpose of differentiation, and cannot be understood as indicating or implying relative importance, nor can be understood as indicating or implying a sequence.

In the embodiments of this application, the resource scheduler selects a first user with a minimum dominant share from N users (resources are to be allocated to tasks of the N users) in the distributed system. The dominant share is a maximum value of resource usage ratios of resources occupied by a user; the resource usage ratio is a ratio of a volume of a type of resource occupied by the user to a total allocatable resource volume of the resource; and N is a positive integer greater than 1. The resource scheduler selects a first task from tasks, of the first user, to which no resources are allocated. The resource scheduler selects a first node from M nodes according to dominant idle resources of the M nodes. A dominant idle resource of the first node is the same as a resource corresponding to a dominant share of the first user, the dominant idle resource is a resource with a maximum idle ratio on a node, the idle ratio is a ratio of a current idle resource volume of a type of resource to a total resource volume of the resource, and M is a positive integer greater than 1. The resource scheduler schedules a resource of the first node to the first user, so that the first user executes the first task by using the resource of the first node. According to the foregoing solution, fairness between users is implemented. A node is selected based on dominant idle resources, and a resource of the selected node is allocated to a selected user. Because a dominant idle resource of the selected node is the same as a resource corresponding to a dominant share of the selected user, it is implemented that different types of users are allocated to different types of nodes, thereby implementing node resource load balancing, and reducing resource sharing interference to some extent.

The following describes the resource scheduling solution provided in this application in detail with reference to the accompanying drawings.

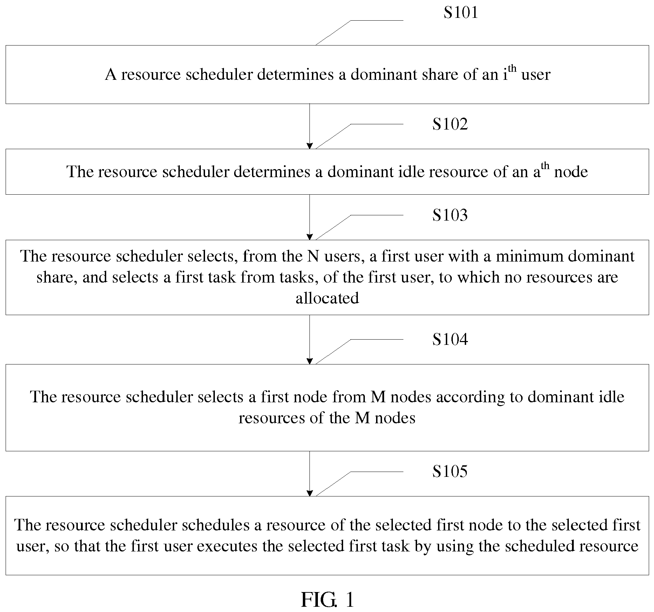

Referring to FIG. 1, FIG. 1 is a flowchart of a resource scheduling method according to this application. The resource scheduling method provided in this application is used to allocate resources to N users in a distributed system. The method includes the following steps.

S101. A resource scheduler determines a dominant share of an $i^{th}$ user.

The dominant share is a maximum value of user resource usage ratios corresponding to m types of resources,

a user resource usage ratio corresponding to a $j^{th}$ type of resource is a ratio of a resource volume of the $j^{th}$ type of resource that has been currently allocated to the $i^{th}$ user to a total allocatable resource volume of the $j^{th}$ type of resource; j runs over all positive integers not greater than m; m represents a total quantity of to-be-scheduled resource types; i runs over all positive integers not greater than N; and N is a positive integer greater than 1. The total quantity of to-be-scheduled resource types is a total quantity of types of resources that currently need to be scheduled to users.

Optionally, the dominant share of the $i^{th}$ user may be determined by using the following Formula (1.1):

$$s_i = \max_{j=1}^{m}\{u_{ij}/r_j\} \quad \text{Formula (1.1)}$$

where $s_i$ represents the dominant share of the $i^{th}$ user; $u_{ij}$ represents the resource volume of the $j^{th}$ type of resource that is already allocated to the $i^{th}$ user, $r_j$ represents the total allocatable resource volume of the $j^{th}$ type of resource, and m represents the total quantity of to-be-scheduled resource types.

Optionally, when at least two types of resources correspond to the maximum value of the user resource usage ratios corresponding to the m types of resources, any one of the at least two types of resources may be used as a resource corresponding to the dominant share.

S102. The resource scheduler determines a dominant idle resource of an $a^{th}$ node.

The dominant idle resource is a resource that is of the m types of resources and that has a maximum corresponding idle ratio; an idle ratio corresponding to a $b^{th}$ type of resource is a ratio of a current idle resource volume of the $b^{th}$ type of resource of the $a^{th}$ node to a total resource volume of the $b^{th}$ type of resource of the $a^{th}$ node, b runs over all positive integers not greater than m; a runs over all positive integers not greater than M, and M represents a total quantity of nodes with to-be-scheduled resources. If the distributed system includes a plurality of nodes, M nodes of the plurality of nodes are required in resource scheduling of this time, where M is a positive integer greater than 1.

Optionally, the idle ratio of the dominant idle resource of the $a^{th}$ node may be determined by using the following Formula (1.2):

$$h_a = \max_{j=1}^{m}\left\{ x_{aj}/r_{aj} \right\} \quad \text{Formula (1.2)}$$

where $h_a$ represents the idle ratio of the dominant idle resource of the $a^{th}$ node; $x_{aj}$ represents an idle resource volume of the $j^{th}$ type of resource of the node a, $r_{aj}$ represents the total resource volume of the $j^{th}$ type of resource of the node a, and m represents the total quantity of to-be-scheduled resource types.

S103. The resource scheduler selects, from the N users, a first user with a minimum dominant share, and selects a first task from tasks, of the first user, to which no resources are allocated.

If at least two users have the minimum dominant share, one user may be randomly selected from the at least two users. Further, user resource usage ratios of the m types of resources of the at least two users may be sorted, and a user corresponding to a user resource usage ratio ranking second is selected. When at least two users have the minimum dominant share, user selection is not specifically limited in this application.

S104. The resource scheduler selects a first node from M nodes according to dominant idle resources of the M nodes. A dominant idle resource of the selected first node is the same as a resource corresponding to a dominant share of the selected first user.

S105. The resource scheduler schedules a resource of the selected first node to the selected first user, so that the first user executes the selected first task by using the scheduled resource.

According to the solution provided in this application, the resource scheduler determines a dominant share of each user and a dominant idle resource of each node, and then allocates resources on the nodes to the users based on dominant shares and dominant idle resources. A resource is preferentially allocated to a task of a user with a small dominant share, thereby implementing fairness between users. Then, a node is selected based on the dominant idle resources, and a resource of the selected node is allocated to a selected user. Because a dominant idle resource of the selected node is the same as a resource corresponding to a dominant share of the selected user, it is implemented that different types of users are allocated to different types of nodes, thereby implementing node resource load balancing, and reducing resource sharing interference to some extent.

In a possible implementation, when the first node is selected based on the dominant idle resources, the dominant idle resource of the selected first node is the same as the resource corresponding to the dominant share of the selected first user, and the selected first node is a node that is of the M nodes and that has a maximum idle ratio of a dominant idle resource. Certainly, one node may be further selected, in a random or another manner, from a plurality of nodes with dominant idle resources the same as the resource corresponding to the dominant share of the selected first user, and this is not specifically limited in this application.

In a possible implementation, the M nodes in this application may be grouped into different groups, and dominant idle resources of nodes in a same group are the same. During grouping, each node may determine a group to which the node belongs after the resource scheduler performs scheduling, or the resource scheduler may perform grouping. After scheduling each time, the resource scheduler may group a node scheduled this time into a corresponding group.

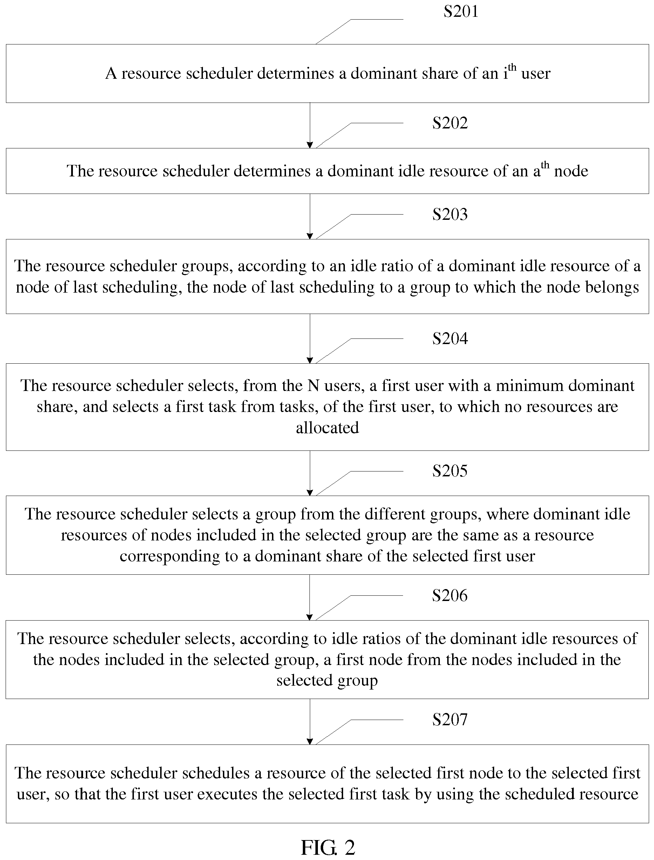

Specifically, after the resource scheduler determines the idle ratio of the dominant idle resource of the $a^{th}$ node, the resource scheduler groups each node into a different group according to an idle ratio of a dominant idle resource of the node. Therefore, when the first node is being selected from the M nodes according to the dominant idle resources, the first node is selected from the M nodes according to a grouping status. A specific implementation procedure is shown in FIG. 2.

Referring to FIG. 2, FIG. 2 is a flowchart of another resource scheduling method according to an embodiment of this application. The method includes the following steps.

S201. A resource scheduler determines a dominant share of an $i^{th}$ user. For a specific determining manner, refer to step S101 in the embodiment shown in FIG. 1.

S202. The resource scheduler determines an idle ratio of a dominant idle resource of an $a^{th}$ node. For a specific determining manner, refer to step S102 in the embodiment shown in FIG. 1.

S203. The resource scheduler groups, according to an idle ratio of a dominant idle resource of a node of last scheduling, the node of last scheduling to a group to which the node belongs.

The M nodes are grouped into different groups, and dominant idle resources on different nodes grouped into a same group are the same. For example, the M nodes are grouped into a CPU resource group and a memory resource group. Dominant idle resources of nodes included in the CPU resource group are all CPU resources, and dominant idle resources of nodes included in the memory resource group are all memory resources.

Optionally, when at least two types of resources correspond to an idle ratio of a dominant idle resource of a node, one of the at least two types of resources may be used as the dominant idle resource. Therefore, during grouping, the node may be grouped into a resource group that is used as dominant idle resources. Certainly, the node may be further grouped into at least two groups. For example, resources on a node 1 include a CPU resource and a memory resource, and idle ratios of the two types of resources are the same. Therefore, both the two types of resources may be used as a dominant idle resource, and accordingly, the node 1 may be grouped into the CPU resource group, or be grouped into the memory resource group.

S204. The resource scheduler selects, from the N users, a first user with a minimum dominant share, and selects a first task from tasks, of the first user, to which no resources are allocated.

S205. The resource scheduler selects a group from the different groups, where dominant idle resources of nodes included in the selected group are the same as a resource corresponding to a dominant share of the selected first user.

S206. The resource scheduler selects, according to idle ratios of the dominant idle resources of the nodes included in the selected group, a first node from the nodes included in the selected group.

Specifically, when the first node is being selected according to the idle ratios of the dominant idle resources, a first node with a maximum idle ratio of a dominant idle resource may be selected.

S207. The resource scheduler schedules a resource of the selected first node to the selected first user, so that the first user executes the selected first task by using the scheduled resource.

According to the foregoing implementation, the nodes are dynamically grouped into different groups according to a current load status (a user dominant share), to receive different types of tasks. This implements node resource load balancing and can prevent interference between shared resources.

In a possible design, that the resource scheduler selects the first node from the M nodes according to the dominant idle resources of the M nodes may be implemented in the following manner.

In a first possible implementation:

A1. The resource scheduler determines at least two nodes with dominant idle resources the same as the resource corresponding to the dominant share of the selected first user.

A2. The resource scheduler determines a user dominant usage ratio of the selected first user on a $c^{th}$ node of the at least two nodes, where the user dominant usage ratio is a maximum value of user usage ratios corresponding to m types of resources, a user usage ratio corresponding to a $d^{th}$ type of resource is a ratio of a resource volume of the $d^{th}$ type of resource that is already allocated to the selected user and that is of the $c^{th}$ node to a total allocatable resource volume of the $d^{th}$ type of resource of the $c^{th}$ node, the $c^{th}$ node is any one of the at least two nodes, and d runs over all positive integers not greater than m.

A3. The resource scheduler selects, from the at least two nodes, the first node corresponding to a minimum user dominant usage ratio of the first user.

In a second possible implementation:
The at least two nodes in the first possible implementation may be two nodes with a maximum idle ratio of a dominant idle resource. Idle ratios of the dominant idle resources on the at least two nodes may be the same or different. Therefore, the resource scheduler may select the first node in the following manner.

B1. The resource scheduler determines at least two nodes with maximum dominant idle resources, where the dominant idle resources on the at least two nodes are the same as the resource corresponding to the dominant share of the selected first user.
B2. The resource scheduler determines a user dominant usage ratio of the selected first user on a c^th node of the at least two nodes.
B3. The resource scheduler selects, from the at least two nodes, the first node corresponding to a minimum user dominant usage ratio of the first user.

In a third possible implementation:
The at least two nodes may be two nodes with a maximum idle ratio of a dominant idle resource, and a difference between idle ratios of dominant idle resources on any two nodes of the at least two nodes is less than a preset resource ratio. Therefore, the resource scheduler may select the first node in the following manner.

C1. The resource scheduler determines at least two nodes with maximum dominant idle resources, where the dominant idle resources on the at least two nodes are the same as the resource corresponding to the dominant share of the selected first user, and a difference between idle ratio s of dominant idle resources on any two nodes of the at least two nodes is less than a preset resource ratio.
C2. The resource scheduler determines a user dominant usage ratio of the selected first user on a c^th node of the at least two nodes.
C3. The resource scheduler selects, from the at least two nodes, the first node corresponding to a minimum user dominant usage ratio of the first user.

Optionally, a user dominant usage ratio of a k^th user corresponding to a c^th node may be determined by using the following Formula (1.3):

$$w_{kc} = \max_{d=1}^{m} \left\{ u_{kd} / r_{ad} \right\} \quad \text{Formula (1.3)}$$

$w_{kc}$ represents the user dominant usage ratio of the k^th user on the c^th node; $u_{kd}$ represents a resource volume of a d^th type of resource that has been currently allocated to the k^th user on the c^th node, and $r_{cd}$ represents a total allocatable resource volume of the d^th type of resource of the c^th node.
According to the foregoing implementation, a node is selected according to a user dominant usage ratio of a user on each node, and a node with a minimum user dominant usage ratio is selected for a task of the user each time, thereby implementing resource load balancing of the user on each node.
In a possible implementation, after determining the dominant share of the i^th user, the resource scheduler may group, according to a dominant share of each user, the N users into user groups corresponding to different resource types. Resources corresponding to dominant shares of users included in a different user group are the same. Therefore, when a node is being selected for a user, one group is selected from a plurality of groups corresponding to the node, a resource type corresponding to the selected group is the same as a resource type corresponding to a user group of the user. Then, a node with a maximum idle ratio of a dominant idle resource is selected from the selected group for scheduling.
In a possible design, the method may further include:

when determining that resources corresponding to idle ratios of the dominant idle resources of all the nodes are different from the resource corresponding to the dominant share of the selected first user, selecting, by the resource scheduler, a second user with a maximum dominant share from other users with resources different from the resource corresponding to the dominant share of the first user, and selecting a second task from tasks, of the second user, to which no resources are allocated;
selecting, by the resource scheduler from the M nodes, a second node that has a maximum idle ratio of a dominant idle resource and whose node dominant idle resource is the same as a resource corresponding to a dominant share of the selected second user; and
scheduling, by the resource scheduler, a resource of the selected second node to the selected second user, so that the second user executes the selected second task by using the scheduled resource.

According to the foregoing implementation, when determining that the resources corresponding to the idle ratios of the dominant idle resources of all the nodes are different from the resource corresponding to the dominant share of the selected first user, the resource scheduler selects the second user with the maximum dominant share from another user with the resource different from the resource corresponding to the dominant share of the first user for scheduling. This can ensure that tasks of different types of users are allocated to different nodes, and then ensure node resource load balancing.

In a possible design, the method may further include: when determining that an idle ratio of the dominant idle resource of the $a^{th}$ node is less than a preset threshold, determining, by the resource scheduler, that resource scheduling is not performed on the $a^{th}$ node.

According to the foregoing implementation, resource scheduling is no longer performed on a node with an idle ratio of a dominant idle resource less than the preset threshold. Therefore, a resource waste and a time resource waste caused by occupying a resource of the resource scheduler are avoided when a to-be-scheduled resource volume does not meet a user requirement.

Specifically, when determining that the idle ratio of the dominant idle resource of the $a^{th}$ node is less than the preset threshold, the resource scheduler may group the $a^{th}$ node into a marginal group. When scheduling a node resource, the resource scheduler does not perform scheduling on nodes in the marginal group.

The following specifically describes this application with reference to a specific application scenario.

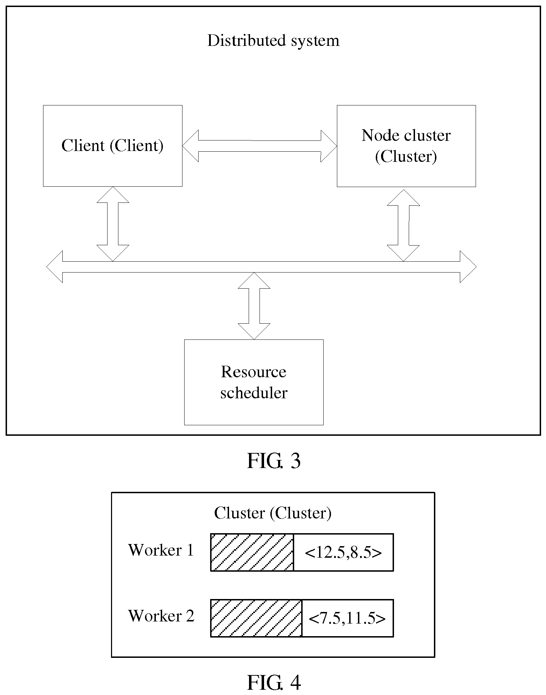

As shown in FIG. 3, FIG. 3 is a schematic diagram of a distributed system architecture. A distributed system includes a node cluster, a client (Client), and a resource scheduler. The node cluster, the client (Client), and the resource scheduler can communicate with each other.

It is assumed that scheduling is performed on resources included in a node cluster (cluster). A CPU resource and a memory (mem) resource included in the cluster are used as an example for description in this application.

The cluster includes two worker (worker) nodes: a worker 1 and a worker 2. A total resource volume of the worker 1 and the worker 2 is: 20 pieces of CPU resources and 30 gigabytes (English: GigaByte, G for short) of memory resources.

When the resource scheduler receives a scheduling request that is sent by the client and that is used to schedule a user task, an allocatable CPU resource volume of the worker 1 is 12.5 pieces, an allocatable memory resource volume of the worker 1 is 8.5 G; an allocatable CPU resource volume of the worker 2 is 7.5 pieces, an allocatable memory resource volume of the worker 2 is 11.5 G; and a total allocatable resource volume of the two worker nodes is: 20 pieces of CPU resources and 20 G of memory resources, as shown in FIG. 4.

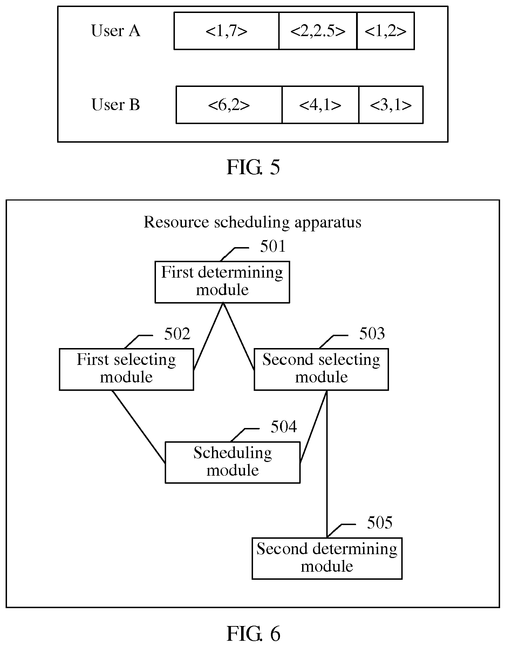

When the resource scheduler receives the scheduling request, to-be-scheduled users include a user A and a user B. The user A has three to-be-executed tasks (tasks): {taskA1, <1, 7>; taskA2, <2, 2.5>; taskA3, <1, 2>}, and the user B has three to-be-executed tasks: {taskB1, <6, 2>; taskB2, <4, 1>; taskB3, <3, 1>}. A resource representation format of a task is <CPU, memory>. The CPU is in units of piece, and the memory is in units of G, as shown in FIG. 5.

In the solution provided in the prior art, when resource allocation is performed by using a DRF-based scheduling method, an allocation result is shown in Table 1.

**Table 1**

| Task scheduling | User A | | | User B | | | Total CPU allocation ratio | Total memory allocation ratio |
| --- | --- | --- | --- | --- | --- | --- | --- | --- |
| | User resource usage ratio <CPU, mem> | Dominant share | Allocated node | User resource usage ratio <CPU, mem> | Dominant share | Allocated node | | |
| TaskA1 | <1/20, 7/20> | 7/20 | Worker 1 | <0, 0> | 0 | N/A | 1/20 | 7/20 |
| TaskB1 | <1/20, 7/20> | 7/20 | N/A | <6/20, 2/20> | 6/20 | Worker 2 | 7/20 | 9/20 |
| TaskB2 | <1/20, 7/20> | 7/20 | N/A | <6/20, 2/20> | 6/20 | Resource not satisfied | 7/20 | 9/20 |
| TaskA2 | <1/20, 7/20> | 7/20 | Resource not satisfied | <6/20, 2/20> | 6/20 | N/A | 8/20 | 12/20 |

First-time allocation is performed for the taskA1 of the user A. According to a sequence of nodes, resources that are of resources on the worker 1 and that are required by the user A for scheduling the taskA1 are allocated to the user A. After the first-time allocation, a dominant share of the user A is 7/20, and a dominant share of the user B is 0. Refer to a second row in Table 1.

In second-time allocation, resource allocation is performed for the user B, and resources that are of the resources on the worker 1 and that are required by the user B for scheduling the taskB1 are allocated to the user B. In this case, remaining resources on the worker 1 are insufficient to be allocated to the user B. Therefore, resources that are on the worker 2 and that are required by the user B for scheduling the taskB1 are allocated to the user B. Refer to a third row of Table 1. After the second-time allocation, the dominant share of the user A is 7/20, and the dominant share of the user B is 6/20.

In third-time allocation, resource allocation is performed for the user B, and resources that are of the resources on the worker 1 and that are required by the user B for scheduling the taskB2 are allocated to the user B. In this case, remaining resources on the worker 1 are insufficient to be allocated to the user B. Therefore, resources that are on the worker 2 and that are required by the user B for scheduling the taskB2 are allocated to the user B. In this case, remaining resources on the worker 1 are insufficient to be allocated to the user B. Therefore, resource allocation is performed for the user A, and resources that are of the resources on the worker 1 and that are required by the user A for scheduling the taskA2 are allocated to the user A. In this case, remaining resources on the worker 1 are insufficient to be allocated to the user A. Therefore, resources that are on the worker 2 and that are required by the user A for scheduling the taskA2 are allocated to the user B. In this case, remaining resources on the worker 2 are insufficient to be allocated to the user A either, and allocation is stopped. Refer to a fourth row and a fifth row in Table 1.

It can be learned from Table 1 that, a CPU resource utilization of the worker 1 is ((Scheduled CPU resources+Originally occupied CPU resources)/Total CPU resource volume)*100%=((1+7.5)/20)*100%=42.5%, a memory resource utilization of the worker 1 is ((Scheduled memory resource volume+Originally occupied memory resource volume)/Total memory resource volume)*100%=((21.5+7)/30)*100%=95%, a CPU resource utilization of the worker 2 is ((6+12.5)/20)*100%=92.5%, and a memory resource utilization of the worker 2 is ((2+18.5)/30)*100%=68.3%.

A total resource utilization is:

A total CPU resource utilization is: Total scheduled CPU resource volume of the worker 1 and the worker 2/Total idle CPU resource volume of the two worker nodes*100%=((1+6)/20)*100%=35%, and a total memory resource utilization is: Total scheduled memory resource volume of the worker 1 and the worker 2/Total idle memory resource volume of the two worker nodes*100%=((7+2)/20)*100%=45%.

It can be learned from the foregoing result that, although resource fairness is ensured by using the DRF method, problems such as node resource load balancing, resource load balancing of a user service on each node, and shared resource interference between a same type of tasks are not considered, and correlation of user fairness and node resource load balancing is neglected. Therefore, resource usage efficiency cannot be optimized to a maximum extent possible, or problems such as shared resource interference between tasks cannot be resolved.

Table 2 shows a result of resource scheduling on the foregoing tasks by using a scheduling method (polling or minimum connection quantity) considering load balancing. It can be learned according to the result in Table 2 that remaining resources on the worker 1 are <11.5, 1.5 G>, and remaining resources on the worker 2 are <0.5, 7>. Allocation cannot be performed for a taskA3 of the user A and a taskB2 and a taskB3 of the user B before execution of another task is finished and resources are released. Consequently, a resource utilization is low, and time performance is low.

**Table 2**

| Task scheduling | Selected node | Remaining resources <CPU, mem> on a node | Total CPU allocation | Total memory allocation |
|---|---|---|---|---|
| TaskA1 | Worker 1 | <11.5, 1.5> | 1/20 | 7/20 |
| TaskB1 | Worker 2 | <1.5, 9.5> | 6/20 | 9/20 |
| TaskA2 | Resources are insufficient, and allocation cannot be performed | N/A | 6/20 | 9/20 |
| TaskB2 | Resources are insufficient, and allocation cannot be performed | N/A | 6/20 | 9/20 |

The first-time allocation is performed for the taskA1 of the user A. According to a sequence of nodes, resources that are of resources on the worker 1 and that are required by the user A for scheduling the taskA1 are allocated to the user A. After the first-time allocation, total CPU allocation is 1/20, and total memory allocation is 7/20. Refer to a second row in Table 2. Total CPU allocation = Volume of CPU resources allocated to a user/Total idle CPU resource volume. After the first-time allocation, a quantity of tasks to which resources on the worker 1 are allocated is 1, and a quantity of tasks to which resources on the worker 2 are allocated is 0.

In the second-time allocation, according to a sequence of users, resource allocation is performed for the user B, and resources that are of resources on the worker 2 and that are required by the user B for scheduling the taskB1 are allocated to the user B. Refer to a third row of Table 2. After the second-time allocation, total CPU allocation is 6/20, and total memory allocation is 9/20. After the second-time allocation, the quantity of tasks to which the resources on the worker 1 are allocated is 1, and the quantity of tasks to which the resources on the worker 2 are allocated is 1.

In the third-time allocation, resource allocation is performed for the user A, and resources that are of the resources on the worker 1 and that are required by the user A for scheduling the taskA2 are allocated to the user A. In this case, remaining resources on the worker 1 are insufficient to be allocated to the user A. Therefore, resources that are on the worker 2 and that are required by the user A for scheduling the taskA2 are allocated to the user A. In this case, remaining resources on the worker 1 are insufficient to be allocated to the user A either. Therefore, resource allocation is performed for the user B, and resources that are of the resources on the worker 1 and that are required by the user B for scheduling the taskB2 are allocated to the user B. In this case, remaining resources on the worker 1 are insufficient to be allocated to the user B. Therefore, resources that are on the worker 2 and that are required by the user B for scheduling the taskB2 are allocated to the user B. In this case, remaining resources on the worker 2 are insufficient to be allocated to the user B either, and allocation is stopped. Refer to a fourth row and a fifth row in Table 1.

It can be learned from the foregoing Table 2 that, a CPU resource utilization of the worker 1 is $((1+7.5)/20)*100\%=42.5\%$, a memory resource utilization of the worker 1 is $((21.5+7)/30)*100\%=95\%$, a CPU resource utilization of the worker 2 is $((6+12.5)/20)*100\%=92.5\%$, and a memory resource utilization is $((2+18.5)/30)*100\%=68.3\%$.

A total resource utilization is:

A total CPU resource utilization is: $((1+6)/20)*100\%=35\%$; and

a total memory resource utilization is: $((7+2)/20)*100\%=45\%$.

It can be learned from a result shown in the foregoing Table 2 that, in the scheduling method based on load balancing, although load balancing of a node task quantity is considered, a case in which resources required by tasks are greatly different and problems such as resource load balancing of a user service on each node and shared resource interference between a same type of tasks are not considered, and correlation of user fairness and node resource load balancing is neglected. Therefore, resource usage efficiency cannot be optimized to a maximum extent possible, or problems such as shared resource interference between tasks cannot be resolved.

A scheduling result of resource scheduling by using the solution provided in this application is shown in Table 3.

Before the resource scheduler performs resource scheduling, an idle ratio of a dominant idle resource of a worker 1 is <12.5/20, 8.5/30>, the worker 1 is grouped into a CPU resource group, an idle ratio of a dominant idle resource of a worker 2 is <7.5/20, 11.5/30>, and the worker 2 is grouped into a memory resource group.

The resource scheduler allocates no resources to a user A or a user B before resource scheduling. Therefore, both a dominant share of the user A and a dominant share of the user B are 0. A task may be selected from the user A or a task may be selected from the user B for scheduling. Referring to Table 3, Table 3 is a status of resources allocated to the user A and the user B after the resource scheduler performs scheduling based on the solution provided in this application. In Table 3, preferential scheduling for a task taskA1 of the user A is used as an example for description. Alternatively, scheduling may be preferentially performed on a taskB 1 of the user B, and details are not described herein in this embodiment of the present invention. Scheduling for three tasks of the user A and three tasks of the user B may be executed based on a task storage sequence.

**Table 3**

| Task scheduling | User A | | | | User B | | | | Idle ratio | Idle ratio of a dominant idle resource | Node group |
| --- | --- | --- | --- | --- | --- | --- | --- | --- | --- | --- | --- |
| | User resource usage ratio <CPU, mem> | Dominant share | User usage ratio | User dominant usage ratio | User resource usage ratio <CPU, mem> | Dominant share | User usage ratio | User dominant usage ratio | | | |
| TaskA1 | <1/20, 7/20> | 7/20 | Worker <1/7.5, 7/11.5> | 7/11.5 | <0, 0> | 0 | N/A | N/A | Worker <6.5/20, 4.5/30> | 6.5/20 | CPU resource group |
| TaskB 1 | <1/20, 7/20> | 7/20 | N/A | N/A | <6/20, 2/20> | 6/20 | Worker1 <6/12.5, 2/8.5> | 6/12.5 | Worker 1 <6.5/20, 6.5/30> | 6.5/20 | CPU resource group |
| TaskB2 | <1/20, 7/20> | 7/20 | N/A | N/A | <10/20, 3/20> | 10/20 | Worker2 <4/7.5, 1/11.5> | 4/7.5 | Worker 2 <2.5/20, 3.5/30> | 2.5/20 | CPU resource group |
| TaskB3 | <1/20, 7/20> | 7/20 | N/A | N/A | <13/20, 4/20> | 13/20 | Worker1 <9/12.5, 3/8.5> | 9/12.5 | Worker 1 <3.5/20, 5.5/30> | 5.5/30 | Memory resource group |
| TaskA2 | <3/20, 9.5/20> | 9.5/20 | Worker 1 <2/12.5, 2.5/8.5> | 2.5/8.5 | <13/20, 4/20> | 13/20 | N/A | N/A | Worker 1 <1.5/20, 3/30> | 3/30 | Memory resource group |
| TaskA3 | <4/20, 11.5/20> | 11.5/20 | Worker 1 <3/12.5, 4.5/8.5> | 4.5/8.5 | <13/20, 4/20> | 13/20 | N/A | N/A | Worker 1 <0.5/20, 1.5/30> | 1.5/30 | Marginal group |

Referring to a second row in Table 3, in first-time scheduling, the resource scheduler selects a user in a random manner or according to a user sorting order. The user A is selected herein, the taskA1 of the user A is selected, a node worker 2 is selected randomly, and then resources on the worker 2 are allocated as resources required by the user A for executing the taskA1. After the first-time scheduling, the dominant share of the user A is 7/20. Currently, the user A corresponds to a memory resource user group. The dominant share of the user B is still 0. An idle ratio of a dominant idle resource of the user A on the worker 1 is N/A, where N/A represents not to be allocated this time, a user usage ratio of the user A on the worker 2 is <1/7.5, 7/11.5>, and both a user usage ratio of the user B on the worker 1 and a user usage ratio of the user B on the worker 2 are N/A. A current idle ratio of the worker 1 is <12.5/20, 8.5/30>. Therefore, an idle ratio of a dominant idle resource of the worker 1 is 12.5/20, and the worker 1 is grouped into the CPU resource group. An idle ratio of the worker 2 is <6.5/20, 4.5/30>. Therefore, an idle ratio of a dominant idle resource of the worker 2 is 6.5/20, and the worker 2 is grouped into the CPU resource group.

After the first-time scheduling, a user with a minimum dominant share is the user B. Therefore, the taskB1 is selected from the tasks of the user B. Because the dominant share of the user B is 0, resources on a node of the CPU resource group may be allocated to the taskB1, or resources on a node of the memory resource group may be allocated to the taskB1. However, there is no node in the memory resource group. Therefore, resources on the node of the CPU resource group are allocated. Therefore, in second-time scheduling, the resource scheduler selects the worker 1 with a maximum idle ratio of a dominant idle resource, and allocates resources that are of resources on the worker 1 and that are required by the user A for executing the taskA1 to the user A. After the second-time scheduling, as shown in a third row in Table 3, the dominant share of the user A is 7/20. Currently, the user A corresponds to the memory resource user group. The dominant share of the user B is still 6/20. A user usage ratio of the user A on the worker 1 is N/A, where N/A represents not to be allocated this time. The user usage ratio of the user A on the worker 2 is not changed compared with that in the first-time scheduling, and is still <1/7.5, 7/11.5>. A user usage ratio of user B on the worker 1 is <6/12.5, 2/8.5>, and a user usage ratio of user B on the worker 2 is N/A. The idle ratio of the dominant idle resource of the worker 1 is <6.5/20, 6.5/30>, and the worker 1 is grouped into the CPU resource group. The idle ratio of the dominant idle resource of the worker 2 is not changed, and is still <6.5/20, 4.5/30>, and the worker 2 still belongs to the CPU resource group. In this embodiment, during node selection, selecting a node with a maximum idle ratio of a dominant idle resource is used as an example for description.

After the second-time scheduling, the dominant share of the user B is still less than the dominant share of the user A. Therefore, the taskB2 is selected from the user B. The user B belongs to the CPU resource user group. Therefore, the resource scheduler selects, from the CPU resource group, a node with a maximum idle ratio of a dominant idle resource. It is determined that the idle ratio of the dominant idle resource of the worker 1 is the same as that of the worker 2, and both are 6.5/20. Therefore, a node that is of nodes corresponding to the user B and has a minimum user dominant usage ratio is selected. It is determined that a user dominant usage ratio of the user B on the worker 1 is 6/12.5, and a dominant idle resource usage ratio of the user B on the worker 2 is N/A. Because the worker 2 does not allocate a resource to the user B, it is determined that an actual user dominant usage ratio of the user B on the worker 2 is 0. Therefore, for changed values corresponding to the users and nodes after third-time scheduling, refer to a fourth row in Table 3. In this application, during node selection, if there are two or more nodes with a maximum idle ratio of a dominant idle resource, a node with a minimum user dominant usage ratio is selected from the two or more nodes.

After the third-time scheduling, the resource scheduler determines that the dominant share of the user A is 7/20, and currently, the user A corresponds to the memory resource user group; and the dominant share of the user B is 10/20. The idle ratio of the worker 1 is <6.5/20, 6.5/30>. Therefore, the idle ratio of the dominant idle resource of the worker 1 is 6.5/20, and the worker 1 is grouped into the CPU resource group. The idle ratio of the worker 2 is <2.5/20, 3.5/30>. Therefore, the idle ratio of the dominant idle resource of the worker 2 is 2.5/20, and the worker 2 still belongs to the CPU resource group. In fourth-time scheduling, the resource scheduler selects the user A with the minimum dominant share. A resource corresponding to the dominant share of the user A is a memory resource, and a node needs to be selected from the memory resource group. Because there is no node in the memory resource group, the resource scheduler selects, from other users with resources different from the resource corresponding to the dominant share of the first user, the user B with a maximum dominant share for resource scheduling, and selects the taskB3 of the user B for resource scheduling. Then, the worker 1 with a maximum idle ratio of a dominant idle resource is selected from the nodes included in the CPU resource group, where the dominant idle resource of the node is the same as a resource corresponding to the dominant share of the selected user B. The resource scheduler schedules a resource of the selected worker 1 to the selected user B, so that the user B executes the taskB3 by using the scheduled resource. Therefore, for changed values corresponding to the users and nodes after the fourth-time scheduling, refer to a fifth row in Table 3.

After the fourth-time scheduling, the resource scheduler determines that the dominant share of the user A is 7/20, and currently, the user A corresponds to the memory resource user group; and the dominant share of the user B is 13/20. The idle ratio of the worker 1 is <3.5/20, 5.5/30>. Therefore, the idle ratio of the dominant idle resource of the worker 1 is 5.5/30, and the worker 1 is grouped into the memory resource group. The idle ratio of the worker 2 is <2.5/20, 3.5/30>. Therefore, the idle ratio of the dominant idle resource of the worker 2 is 2.5/20, and the worker 2 still belongs to the CPU resource group. In fifth-time scheduling, the resource scheduler selects the user A with the minimum dominant share, and selects the task taskA2. A resource corresponding to the dominant share of the user A is a memory resource, and a node needs to be selected from the memory resource group, and the worker 1 is selected. The resource scheduler schedules a resource of the selected worker 1 to the selected user A, so that the user A executes the taskA2 by using the scheduled resource. Therefore, for changed values corresponding to the users and nodes after the fifth-time scheduling, refer to a sixth row in Table 3.

After the fifth-time scheduling, the resource scheduler determines that the dominant share of the user A is 9.5/20, and currently, the user A corresponds to the memory resource user group; and the dominant share of the user B is 13/20. The idle ratio of the worker 1 is <1.5/20, 3/30>. Therefore, the idle ratio of the dominant idle resource of the worker 1 is 3/30, and the worker 1 is grouped into the memory resource group. The idle ratio of the worker 2 is <2.5/20, 3.5/30>. Therefore, the idle ratio of the dominant idle resource of the worker 2 is 2.5/20, and the worker 2 still belongs to the CPU resource group. In sixth-time scheduling, the resource scheduler selects the user A with the minimum dominant share, and selects a task taskA3. A resource corresponding to the dominant share of the user A is a memory resource, and a node needs to be selected from the memory resource group, and the worker 1 is selected. The resource scheduler schedules a resource of the selected worker 1 to the selected user A, so that the user A executes the taskA3 by using the scheduled resource. Therefore, for changed values corresponding to the users and nodes after the sixth-time scheduling, refer to a sixth row in Table 3. After the sixth-time scheduling, because the idle ratio of the dominant idle resource of the worker 1 is less than a preset threshold, where the preset threshold in this embodiment of the present invention is set to 0.1, the worker 1 is grouped into a marginal group. Resource scheduling is not performed on the worker 1 subsequently.

According to an allocation status in Table 3, it can be learned that:

(1) Tasks of the user A and the user B are all allocated, the dominant share of the user A is 11.5/20, and the dominant share of the user B is 13/20. A difference between the user A and the user B is relatively small, thereby implementing user fairness.

(2) A user dominant usage ratio (memory resource) of the user A on the worker 1 is 4.5/8≈56.3%, and a user dominant usage ratio on the worker 2 is 7/11.5≈61%; a user dominant usage ratio (CPU resource) of the user B on the worker 1 is 9/12.5 =72%, and a user dominant usage ratio (CPU resource) of the user B on the worker 2 is 4/7.5≈53%. It can be determined from the foregoing data that the solution provided in this embodiment of the present invention can implement load balancing of user services between nodes.

(3) A CPU utilization of the worker 1 is ((CPU resources scheduled this time+Originally occupied CPU resources)/Total CPU resource volume)*100%=(19.5/20)*100%=97.5%, a memory utilization of the worker 1 is ((Volume of memory resources scheduled this time+Originally occupied memory resource volume)/Total memory resource volume)*100%=(28.5/30)*100%=95%; a CPU utilization of the worker 2 is (17.5/20)*100%=87.5%, and a memory utilization of the worker 2 is (26.5/30)*100%=88.3%. It can be determined from the foregoing data that the solution provided in this embodiment of the present invention can implement node resource load balancing.

(4) The shared resource interference problem is resolved, a CPU-resource-type task and a memory-resource-type task are dynamically allocated to different nodes, so that the resource sharing interference problem is resolved to some extent.

Because a relationship between user fairness and node resource load balancing is considered, a node resource utilization is improved. A CPU utilization reaches 80%, and a memory utilization reaches 85%, which are respectively improved by 45% and 58% than those in the DRF-based scheduling method and the scheduling method considering load balancing.

Based on an invention concept the same as that of the method embodiment, this application further provides a resource scheduling apparatus. The apparatus is configured to allocate resources to tasks of N users in a distributed system. As shown in FIG. 6, the apparatus includes:

a first determining module 501, configured to determine a dominant share of an $i^{th}$ user, and determine a dominant idle resource of an $a^{th}$ node, where the dominant share is a maximum value of user resource usage ratios corresponding to m types of resources; a user resource usage ratio corresponding to a $j^{th}$ type of resource is a ratio of a resource volume of the $j^{th}$ type of resource that has been currently allocated to the $i^{th}$ user to a total allocatable resource volume of the $j^{th}$ type of resource; j runs over all positive integers not greater than m; m represents a total quantity of to-be-scheduled resource types; i runs over all positive integers not greater than N; N is a positive integer greater than 1; the dominant idle resource is a maximum value of idle ratios corresponding to the m types of resources; an idle ratio corresponding to a $b^{th}$ type of resource is a ratio of a current idle resource volume of the $b^{th}$ type of resource of the $a^{th}$ node to a total resource volume of the $b^{th}$ type of resource of the $a^{th}$ node, b runs over all positive integers not greater than m; a runs over all positive integers not greater than M, and M represents a total quantity of nodes with to-be-scheduled resources;

a first selecting module 502, configured to select, from the N users, a first user with a minimum dominant share determined by the first determining module 501, and select a first task from tasks, of the first user, to which no resources are allocated;

a second selecting module 503, configured to select a first node from M nodes according to dominant idle resources that are on the M nodes and that are determined by the first determining module 501, where a dominant idle resource of the selected first node is the same as a resource corresponding to a dominant share of the selected first user; and

a scheduling module 504, configured to schedule a resource of the first node selected by the second selecting module 503 to the first user selected by the first selecting module 502, so that the first user executes the selected first task by using the scheduled resource.

In a possible design, the M nodes are grouped into different groups, and dominant idle resources of nodes in a same group are the same. The second selecting module 503 is specifically configured to: select a group from the different groups, where dominant idle resources of nodes included in the selected group are the same as the resource corresponding to the dominant share of the selected first user; and select, according to idle ratios of the dominant idle resources of the nodes included in the selected group, the first node from the nodes included in the selected group.

The first node may be a node that is of the M nodes and that has a maximum idle ratio of a dominant idle resource.

In a possible design, during selection of the first node, a second determining module 505 is specifically configured to determine a user dominant usage ratio of the selected first user on a $c^{th}$ node of the at least two nodes, where the user dominant usage ratio is a maximum value of user usage ratios corresponding to the m types of resources; a user usage ratio corresponding to a $d^{th}$ type of resource is a ratio of a resource volume of the $d^{th}$ type of resource that is already allocated to the selected user and that is of the $c^{th}$ node to a total allocatable resource volume of the $d^{th}$ type of resource of the $c^{th}$ node; the $c^{th}$ node is any one of the at least two nodes; and d runs over all positive integers not greater than m; and

the second selecting module 503 is specifically configured to select, from the at least two nodes, the first node corresponding to a minimum user dominant usage ratio that is of the first user and that is determined by the second determining module 505.

In a possible design, the first selecting module 502 is further configured to: when it is determined that the dominant idle resources of all the nodes are different from the resource corresponding to the dominant share of the selected first user, select a second user with a maximum dominant share from other users with resources different from the resource corresponding to the dominant share of the first user, and select a second task from tasks, of the second user, to which no resources are allocated;

the second selecting module 503 is further configured to select, from the M nodes, a second node that has a maximum idle ratio of a dominant idle resource and whose node dominant idle resource is the same as a resource corresponding to a dominant share of the second user selected by the first selecting module 502; and

the scheduling module 504 is further configured to schedule a resource of the second node selected by the second selecting module 503 to the selected second user, so that the second user executes the selected second task by using the scheduled resource.

In a possible design, the scheduling module 504 is further configured to: when it is determined that an idle ratio of the dominant idle resource of the $a^{th}$ node is less than a preset threshold, determine that resource scheduling is not performed on the $a^{th}$ node.

According to the solution provided in this application, the resource scheduling apparatus determines a dominant share of each user and an idle ratio of a dominant idle resource of each node, and then allocates resources of nodes to users based on dominant shares and idle ratios of dominant idle resources, so that both fairness between users and load balancing between nodes are considered, thereby improving a resource utilization, and reducing resource sharing interference to some extent.

Module division in this embodiment of this application is merely an example, is merely logical function division, and there may be another division manner in actual implementation. In addition, functional units in the embodiments of this application may be integrated into one processor, or each of the units may exist alone physically, or two or more units are integrated into one module. The foregoing integrated unit may be implemented in a form of hardware, or may be implemented in a form of software functional modules.

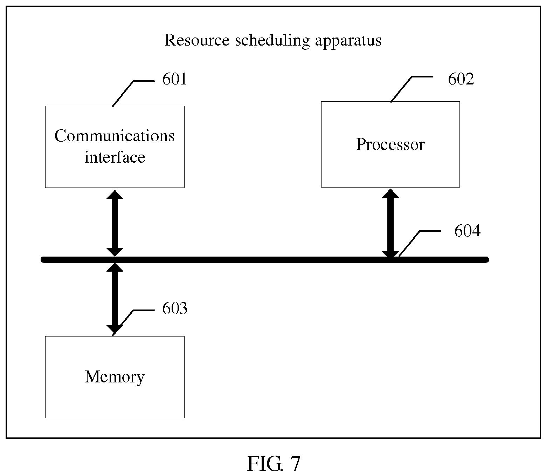

When the integrated unit is implemented in a form of hardware, as shown in FIG. 7, a resource scheduler may include a processor 602. Hardware of an entity corresponding to the foregoing modules may be the processor 602. The processor 602 may be a central processing unit (English: central processing unit, CPU for short), or a digital processing module, or the like. The resource scheduler may further include a communications interface 601. The processor 602 receives, by using the communications interface 601, a user task and a resource list such as those shown in FIG. 4 and FIG. 5. The apparatus further includes a memory 603, configured to store a program executed by the processor 602. The memory 603 may be a non-volatile memory, such as a hard disk drive (English: hard disk drive, HDD for short) or a solid state drive (English: solid-state drive, SSD for short), or may be a volatile memory (English: volatile memory), such as a random access memory (English: random-access memory, RAM for short). The memory 603 is any other medium that can be used to carry or store expected program code in a command or data structure form and can be accessed by a computer, but is not limited thereto.

The processor 602 is configured to execute the program code stored by the memory 603, and is specifically configured to execute the method described in the embodiment shown in FIG. 1 or FIG. 2. Reference may be made to the method described in the embodiment shown in FIG. 1 or FIG. 2, and details are not described herein in this application.

A specific connection medium between the foregoing communications interface 601, processor 602, and memory 603 is not limited in this embodiment of this application. In this embodiment of this application, in FIG. 7, the memory 603, the processor 602, and the communications interface 601 are connected by using a bus 604. The bus is represented by using a thick line in FIG. 7, and a connection manner between other parts is merely used as examples for description, and does not limit the present invention. The bus may be grouped into an address bus, a data bus, a control bus, and the like. For ease of representation, only one thick line is used to represent the bus in FIG. 7, but this does not mean that there is only one bus or only one type of bus.

An embodiment of the present invention further provides a computer readable storage medium, configured to store a computer software instruction that the foregoing processor needs to execute, where the computer software instruction includes a program that the foregoing processor needs to execute.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to this application without departing from the scope of this application. This application is intended to cover these modifications and variations of this application provided that they fall within the scope of protection defined by the following claims and their equivalent technologies.

**Claims**

1. A resource scheduling method, wherein the method is used to allocate resources to tasks of N users in a distributed system, and the method comprises:

   determining, by a resource scheduler, a dominant share of an $i^{th}$ user, wherein the dominant share is a maximum value of user resource usage ratios corresponding to m types of resources; a user resource usage ratio corresponding to a $j^{th}$ type of resource is a ratio of a resource volume of the $j^{th}$ type of resource that has been currently allocated to the $i^{th}$ user to a total allocatable resource volume of the $j^{th}$ type of resource; j runs over all positive integers not greater than m; m represents a total quantity of to-be-scheduled resource types; i runs over all positive integers not greater than N; and N is a positive integer greater than 1;

determining, by the resource scheduler, a dominant idle resource of an $a^{th}$ node, wherein the dominant idle resource is a resource that is of the m types of resources and that has a maximum corresponding idle ratio; an idle ratio corresponding to a $b^{th}$ type of resource is a ratio of a current idle resource volume of the $b^{th}$ type of resource of the $a^{th}$ node to a total resource volume of the $b^{th}$ type of resource of the $a^{th}$ node, b runs over all positive integers not greater than m; a runs over all positive integers not greater than M, and M represents a total quantity of nodes with to-be-scheduled resources;

selecting, by the resource scheduler from the N users, a first user with a minimum dominant share;

selecting a first task from tasks, of the first user, to which no resources are allocated;

selecting, by the resource scheduler, a first node from M nodes according to dominant idle resources of the M nodes, wherein a dominant idle resource of the selected first node is the same as a resource corresponding to a dominant share of the selected first user; and

scheduling, by the resource scheduler, a resource of the selected first node to the selected first user, so that the first user executes the selected first task by using the scheduled resource.

2. The method according to claim 1, wherein the M nodes are grouped into different groups, and dominant idle resources of nodes in a same group are the same; and
the selecting, by the resource scheduler, a first node from M nodes comprises:

selecting, by the resource scheduler, a group from the different groups, wherein dominant idle resources of nodes comprised in the selected group are the same as the resource corresponding to the dominant share of the selected first user; and

selecting, by the resource scheduler according to idle ratios of the dominant idle resources of the nodes comprised in the selected group, the first node from the nodes comprised in the selected group.

3. The method according to claim 1 or 2, wherein the first node is a node that is of the M nodes and that has a maximum idle ratio of a dominant idle resource.

4. The method according to any one of claims 1 to 3, wherein the selecting, by the resource scheduler, a first node from M nodes according to dominant idle resources of the M nodes comprises:

determining, by the resource scheduler, at least two nodes with dominant idle resources the same as the resource corresponding to the dominant share of the selected first user;

determining, by the resource scheduler, a user dominant usage ratio of the selected first user on a $c^{th}$ node of the at least two nodes, wherein the user dominant usage ratio is a maximum value of user usage ratios corresponding to the m types of resources; a user usage ratio corresponding to a $d^{th}$ type of resource is a ratio of a resource volume of the $d^{th}$ type of resource that is already allocated to the selected first user and that is of the $c^{th}$ node to a total allocatable resource volume of the $d^{th}$ type of resource of the $c^{th}$ node; the $c^{th}$ node is any one of the at least two nodes; and d runs over all positive integers not greater than m; and

selecting, by the resource scheduler from the at least two nodes, the first node corresponding to a minimum user dominant usage ratio of the first user.

5. The method according to any one of claims 1 to 4, wherein the method further comprises:

when determining that the dominant idle resources of all the nodes are different from the resource corresponding to the dominant share of the selected first user, selecting, by the resource scheduler, a second user with a maximum dominant share from other users with resources different from the resource corresponding to the dominant share of the first user, and selecting a second task from tasks, of the second user, to which no resources are allocated;

selecting, by the resource scheduler from the M nodes, a second node that has a maximum idle ratio of a dominant idle resource and whose node dominant idle resource is the same as a resource corresponding to a dominant share of the selected second user; and

scheduling, by the resource scheduler, a resource of the selected second node to the selected second user, so that the second user executes the selected second task by using the scheduled resource.

6. The method according to any one of claims 1 to 5, wherein the method further comprises:
when determining that an idle ratio of the dominant idle resource of the $a^{th}$ node is less than a preset threshold, determining, by the resource scheduler, that resource scheduling is not performed on the $a^{th}$ node.

7. A resource scheduling apparatus, wherein the apparatus is configured to allocate resources to tasks of N users in a distributed system, and the apparatus comprises:

a first determining module, configured to determine a dominant share of an $i^{th}$ user, and determine a dominant idle resource of an $a^{th}$ node, wherein the dominant share is a maximum value of user resource usage ratios corresponding to m types of resources; a user resource usage ratio corresponding to a $j^{th}$ type of resource is a ratio of a resource volume of the $j^{th}$ type of resource that has been currently allocated to the $i^{th}$ user to a total allocatable resource volume of the $j^{th}$ type of resource; j runs over all positive integers not greater than m; m represents a total quantity of to-be-scheduled resource types; i runs over all positive integers not greater than N; N is a positive integer greater than 1; the dominant idle resource is a resource that is of the m types of resources and that has a maximum corresponding idle ratio; an idle ratio corresponding to a $b^{th}$ type of resource is a ratio of a current idle resource volume of the $b^{th}$ type of resource of the $a^{th}$ node to a total resource volume of the $b^{th}$ type of resource of the $a^{th}$ node, b runs over all positive integers not greater than m; a runs over all positive integers not greater than M, and M represents a total quantity of nodes with to-be-scheduled resources;
a first selecting module, configured to select, from the N users, a first user with a minimum dominant share determined by the first determining module, and select a first task from tasks, of the first user, to which no resources are allocated;
a second selecting module, configured to select a first node from M nodes according to dominant idle resources that are on the M nodes and that are determined by the first determining module, wherein a dominant idle resource of the selected first node is the same as a resource corresponding to a dominant share of the selected first user; and
a scheduling module, configured to schedule a resource of the first node selected by the second selecting module to the first user selected by the first selecting module, so that the first user executes the selected first task by using the scheduled resource.

8. The apparatus according to claim 7, wherein the M nodes are grouped into different groups, dominant idle resources of nodes in a same group are the same, and the second selecting module is specifically configured to: select a group from the different groups, wherein dominant idle resources of nodes comprised in the selected group are the same as the resource corresponding to the dominant share of the selected first user; and select, according to idle ratios of the dominant idle resources of the nodes comprised in the selected group, the first node from the nodes comprised in the selected group.

9. The apparatus according to claim 7 or 8, wherein the first node is a node that is of the M nodes and that has a maximum idle ratio of a dominant idle resource.

10. The apparatus according to any one of claims 7 to 9, further comprising:

a second determining module, configured to determine at least two nodes with dominant idle resources the same as the resource corresponding to the dominant share of the selected first user; and
determine a user dominant usage ratio of the selected first user on a $c^{th}$ node of the at least two nodes, wherein the user dominant usage ratio is a maximum value of user usage ratios corresponding to the m types of resources; a user usage ratio corresponding to a $d^{th}$ type of resource is a ratio of a resource volume of the $d^{th}$ type of resource that is already allocated to the selected first user and that is of the $c^{th}$ node to a total allocatable resource volume of the $d^{th}$ type of resource of the $c^{th}$ node; the $c^{th}$ node is any one of the at least two nodes; and d runs over all positive integers not greater than m; wherein
the second selecting module is specifically configured to select, from the at least two nodes, the first node corresponding to a minimum user dominant usage ratio that is of the first user and that is determined by the second determining module.

11. The apparatus according to any one of claims 7 to 10, wherein the first selecting module is further configured to: when it is determined that the dominant idle resources of all the nodes are different from the resource corresponding to the dominant share of the selected first user, select a second user with a maximum dominant share from other users with resources different from the resource corresponding to the dominant share of the first user, and select a second task from tasks, of the second user, to which no resources are allocated;
the second selecting module is further configured to select, from the M nodes, a second node that has a maximum idle ratio of a dominant idle resource and whose node dominant idle resource is the same as a resource corresponding to a dominant share of the second user selected by the first selecting module; and
the scheduling module is further configured to schedule a resource of the second node selected by the second selecting module to the selected second user, so that the second user executes the selected second task by using the scheduled resource.

12. The apparatus according to any one of claims 7 to 11, wherein the scheduling module is further configured to: when it is determined that an idle ratio of the dominant idle resource of the $a^{th}$ node is less than a preset threshold, determine that resource scheduling is not performed on the $a^{th}$ node.

S101

A resource scheduler determines a dominant share of an $i^{th}$ user

S102

The resource scheduler determines a dominant idle resource of an $a^{th}$ node

S103

The resource scheduler selects, from the N users, a first user with a minimum dominant share, and selects a first task from tasks, of the first user, to which no resources are allocated

S104

The resource scheduler selects a first node from M nodes according to dominant idle resources of the M nodes

S105

The resource scheduler schedules a resource of the selected first node to the selected first user, so that the first user executes the selected first task by using the scheduled resource

FIG. 1

S201

A resource scheduler determines a dominant share of an $i^{th}$ user

S202

The resource scheduler determines a dominant idle resource of an $a^{th}$ node

S203

The resource scheduler groups, according to an idle ratio of a dominant idle resource of a node of last scheduling, the node of last scheduling to a group to which the node belongs

S204

The resource scheduler selects, from the N users, a first user with a minimum dominant share, and selects a first task from tasks, of the first user, to which no resources are allocated

S205

The resource scheduler selects a group from the different groups, where dominant idle resources of nodes included in the selected group are the same as a resource corresponding to a dominant share of the selected first user

S206

The resource scheduler selects, according to idle ratios of the dominant idle resources of the nodes included in the selected group, a first node from the nodes included in the selected group

S207

The resource scheduler schedules a resource of the selected first node to the selected first user, so that the first user executes the selected first task by using the scheduled resource

FIG. 2

Distributed system

Client (Client) ⟷ Node cluster (Cluster)

Resource scheduler

**FIG. 3**

Cluster (Cluster)

Worker 1 ▨ <12.5,8.5>

Worker 2 ▨ <7.5,11.5>

**FIG. 4**

| User A | <1,7> | <2,2.5> | <1,2> |
|--------|-------|---------|-------|
| User B | <6,2> | <4,1>   | <3,1> |

FIG. 5

Resource scheduling apparatus

501 First determining module

502 First selecting module

503 Second selecting module

504 Scheduling module

505 Second determining module

FIG. 6

Resource scheduling apparatus

Communications interface — 601

Processor — 602

— 604

— 603

Memory

FIG. 7

# INTERNATIONAL SEARCH REPORT

| International application No. |
| --- |
| PCT/CN2017/106096 |

## A. CLASSIFICATION OF SUBJECT MATTER

G06F 9/50 (2006.01) i; H04L 29/08 (2006.01) i

According to International Patent Classification (IPC) or to both national classification and IPC

## B. FIELDS SEARCHED

Minimum documentation searched (classification system followed by classification symbols)

G06F; H04L

Documentation searched other than minimum documentation to the extent that such documents are included in the fields searched

Electronic data base consulted during the international search (name of data base and, where practicable, search terms used)

WPI, EPODOC, CNPAT, CNKI, IEEE, GOOGLE: 资源, 调度, 分配, 任务, 结点, 节点, 用户, 率, 比值, 最大, 空闲, resource, allocat+, schedul+, task?, job?, node?, user?, rate, percentage, ratio, max+, free, idle

## C. DOCUMENTS CONSIDERED TO BE RELEVANT

| Category* | Citation of document, with indication, where appropriate, of the relevant passages | Relevant to claim No. |
| --- | --- | --- |
| A | CN 103699445 A (BEIJING QIYI CENTURY SCIENCE AND TECHNOLOGY CO., LTD.), 02 April 2014 (02.04.2014), description, paragraphs [0002]-[0005] and [0103]-[0137] | 1-12 |
| A | CN 104268018 A (INSPUR (BEIJING) ELECTRONIC INFORMATION INDUSTRY CO., LTD.), 07 January 2015 (07.01.2015), entire document | 1-12 |
| A | CN 105302650 A (YUNNAN UNIVERSITY), 03 February 2016 (03.02.2016), entire document | 1-12 |
| A | CN 103369041 A (BEIJING QIHOO TECHNOLOGY CO., LTD. et al.), 23 October 2013 (23.10.2013), entire document | 1-12 |
| A | WO 2015127668 A1 (PIVOTAL SOFTWARE INC. et al.), 03 September 2015 (03.09.2015), entire document | 1-12 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 January 2018 | 16 January 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>ZHAO, Ting<br><br>Telephone No. (86-10) 53961350 |

Form PCT/ISA/210 (second sheet) (July 2009)

## INTERNATIONAL SEARCH REPORT
### Information on patent family members

| | International application No. |
|---|---|
| | PCT/CN2017/106096 |

| Patent Documents referred in the Report | Publication Date | Patent Family | Publication Date |
|---|---|---|---|
| CN 103699445 A | 02 April 2014 | None | |
| CN 104268018 A | 07 January 2015 | None | |
| CN 105302650 A | 03 February 2016 | None | |
| CN 103369041 A | 23 October 2013 | None | |
| WO 2015127668 A1 | 03 September 2015 | US 2016378560 A1 | 29 December 2016 |

Form PCT/ISA/210 (patent family annex) (July 2009)

**EP 3 553 656 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201611261831X